# EUROPEAN PATENT SPECIFICATION

(11) **EP 2 266 787 B1**
(45) Date of publication and mention of the grant of the patent: **08.02.2012**
(21) Application number: 10166633.7
(22) Date of filing: 21.06.2010
(51) Int. Cl.: B29C 70/50

(54) **Method for manufacturing a panel**
Verfahren zur Herstellung einer Platte
Procédé pour la fabrication d'un panneau

(30) Priority: 24.06.2009 NL 1037072
(43) Date of publication of application: 29.12.2010
(73) Proprietor: Kunststoffenindustrie Van Boven B.V., 4203 NN Gorinchem (NL)
(72) Inventor: Schmaal, Eije, 4285 CB Woudrichem (NL)
(74) Representative: Algemeen Octrooi- en Merkenbureau

(56) References cited:
- US-A1- 2004 096 687
- US-A1- 2008 023 268
- US-B1- 6 251 214

## Description

The invention relates to a method for manufacturing a panel, wherein a mat containing glass fibres is laid on a carrier belt, saturated with a resin and, together with a decorated sheet, moved past a heat source for the purpose of curing the resin.

Such a method is known from publication US 2004/0096687 A1. In this known method, a mat containing glass fibres is first laid on a carrier belt. Then a decorated sheet is laid on said glass matt, whilst subsequently a further glass mat is laid on said decorated sheet. The decorated sheet consists of natural or synthetic paper, tissue, cloth or the like, and the laminate consisting of the two mats with the interposed sheet must be subjected to a repeated bending operation bent so as to form micro ruptures in the sheet prior to the curing step, which renders the method complicated. Also the use of two mats renders the method complicated and, in addition, a comparatively great deal of material is needed.

According to the invention, a decorated fleece containing glass fibres, forming said sheet, is placed on the carrier belt and saturated with a resin, whereupon the glass fibre-containing mat is laid on the decorated sheet, after which the fleece and the mat are pressed together and subsequently carried through a a furnace in which means are disposed with which a profile is pressed in the assembly of fleece and mat.

Using this method, a thin panel can be manufactured in a simple manner whilst using comparatively little material, which panel, as a result of the profile formed therein, will nevertheless exhibit a satisfactory stiffness. By placing the means for forming the profile in the furnace, an effective and permanent profile is realised in the panel.

It is noted that from US 6,251,214 there is known a method for manufacturing products, such as ships' hulls, in a mould. According to said method, a decorated, resin-wetted glass fibre layer is laid on the stationary wall surface of the mould. Said layer is preferably built up of end-to-end strips arranged beside one another. Such a method is not suitable for use in a continuous process as used in the method according to the invention.

US-A-2004/096687 discloses the features of the preamble of claim 1.

In a preferred composition of the panel, the fleece weighs ± 50 g/m² and the mat weighs ± 350 g/m².

To prevent resin from leaking out, sealing strips are arranged on the carrier belt on either side of the film and the mat.

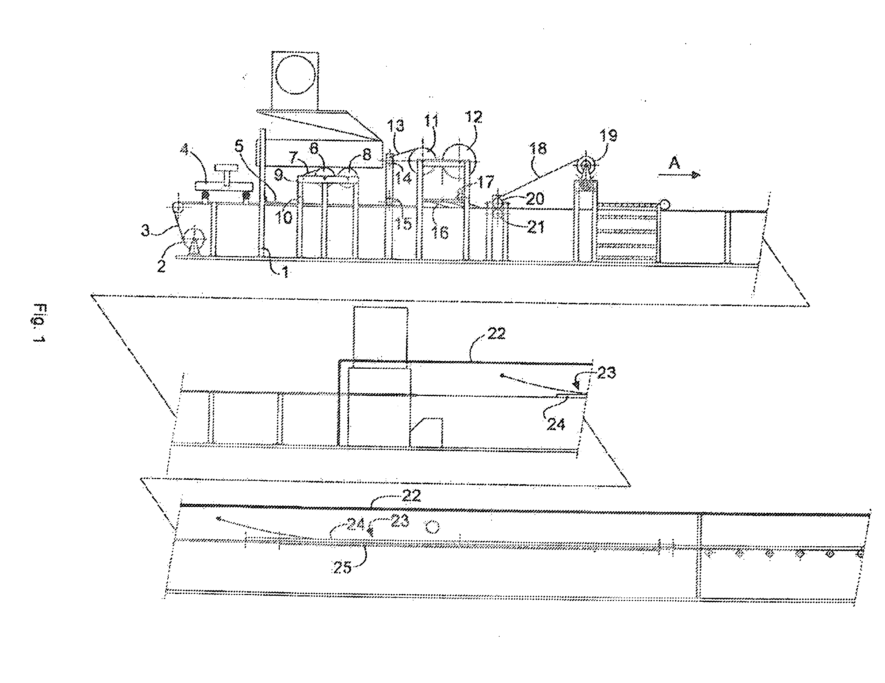

The invention will be explained in more detail below with reference to the appended figure, which is a schematic side view of a device for manufacturing a panel according to the invention.

The device comprises a frame 1 made of interconnected frame beams. A roll 2 is mounted in bearings near one end of the frame. From said roll 2, a carrier belt 3 can be unwound and be pulled through the device in the horizontal direction indicated by the arrow A to be subsequently wound onto a roll (not shown) disposed at the other end of the frame 1.

Near the roll 2 a device 4 is disposed above the horizontal part of the carrier belt 3, by means of which device resin can be sprinkled on the carrier belt. An index plate 5 is disposed behind the device 4, seen in the direction of transport indicated by the arrow A, by means of which index plate the resin applied to the carrier belt 3 is evenly distributed.

Disposed downstream (seen in the direction of transport indicated by the arrow A) of the index plate 5 is a roll 6 supported by the frame. A decorated glass fibre fleece 7 can be pulled from said roll. Disposed beside said roll 6 is a further roll 8 with a glass fibre fleece to be used once the glass fibre fleece 7 has been entirely unwound from the roll 6. As is further shown in the figure, the glass fibre fleece 7 is passed over two pulleys 9 and 10, in such a manner that the glass fibre fleece will be positioned on top of the carrier belt 3 provided with a resin layer and moved along with the carrier belt in the direction indicated by the arrow A whilst being saturated with the resin present on the carrier belt 3.

The fleece 7 is provided with a desired decoration, which has been applied to the fleece 7 by means of inkjet printing, for example. For this purpose an ink is used which does not dissolve in resin.

Disposed downstream of the rolls 6 and 8, seen in the direction of transport indicated by the arrow A, are further rolls 11 and 12, which each comprise an amount of glass mats 13 made from glass fibres. The glass mat 13 being unwound from one of the rolls 11 or 12 is passed over two pulleys 14 and 15 supported by the frame, in such a manner that the glass mat 13 is positioned on top of the decorative fleece 7 and, upon further movement indicated by the arrow A, is saturated with the resin that has permeated through the decorative fleece 7. A strickler 16 mounted to the frame and disposed on top of the glass mat helps to complete to the saturation process. Furthermore, sealing strips made of paper or the like, which are unwound from a roll 17 supported by the frame, are arranged on the carrier belt 3 on either side of the assembly of decorative fleece 7 and glass mat 13 so as to prevent resin from leaking out sideways.

Then a cover film 18 is laid on said assembly of decorative fleece 7 and glass mat 13, which film is unwound from a roll 19 supported by the frame. Said cover film is laid on the assembly of decorative fleece 7 and glass mat near a set of pressure rollers 20 and 21, between which the assembly of decorative fleece 7, glass mat 13 and cover film 18 is pressed together.

Said assembly of decorative fleece 7, glass mat 13 and cover film 18 is subsequently passed through a furnace 22 by means of the carrier belt 3 for the purpose of curing the resin. In the first part of the furnace, a moulding device 23 is disposed, which is made up of an upper mould 24 and a lower mould 25, which upper mould 24 can move up and down with respect to the lower for pressing a desired profile, for example a corrugated sheet profile or a sheetpile profile, in the combination of fibre fleece 7 and glass mat 13. The resin will be cured in the furnace and the combination of glass fibre fleece 7 and glass fibre mat 13 that exits the furnace can be cut to the correct length for the intended panels after the cover film has been removed and the combination has been taken off the carrier belt 3.

The decorative fleece 7 is preferably composed of powder-bound glass fibres, with the decorative fleece preferably having a weight of ± 50 g/m². The glass mat 13, which is likewise preferably made of powder-bound glass fibre, preferably has a weight of ± 350 g/m².

Using the invention, decorative, profiled panels can thus be obtained in a simple and efficient manner, for example in the form of corrugated sheets. By way of example, such panels can be used to form a fence around a garden, in which case the panels may be provided with a decoration in the form of plants or flowers, for example.

## Claims

1. A method for manufacturing a panel, wherein a mat (13) containing glass fibres is laid on a carrier belt, is saturated with a resin and, together with a decorated sheet, is moved past a heat source for the purpose of curing the resin, **characterised in that** a decorated fleece (7) containing glass fibres, forming said sheet, is placed on the carrier belt (3) and saturated with a resin, whereupon the glass fibre-containing mat (13) is laid on the decorated fleece (7), after which the fleece (7) and the mat (13) are pressed together and subsequently carried through a furnace, in which means are disposed with which a profile is pressed in the assembly of fleece (7) and mat (13).

2. A method according to any one of the preceding claims, **characterised in that** a resin is applied to the carrier belt (3) before the glass fibre-containing mat (13) and a decorated fleece (7) are placed on the carrier belt (3).

3. A method according to claim 1 or 2, **characterised in that** sealing strips are arranged on the carrier belt on either side of the fleece and the mat.

4. A method according to any one of the preceding claims, **characterised in that** a cover film (18) is laid on the assembly of fleece and may (13) whereupon said assembly is passed between rollers so as to be compressed.

5. A method according to claim 4, **characterised in that** said cover film (18) is removed from the panel after being passed through the furnace.

6. A method according to any one of the preceding claims, **characterised in that** the fleece (7) weighs ± 50 g/m² and the mat weighs ± 350 g/m².

## Patentansprüche

1. Verfahren zur Herstellung einer Platte, bei dem eine Glasfasern enthaltende Matte (13) auf ein Trägerband gelegt, mit einem Harz getränkt und zusammen mit einem Dekorbogen an einer Wärmequelle vorbeibewegt wird, damit das Harz aushärtet, **dadurch gekennzeichnet, dass** ein Glasfasern enthaltendes, den Bogen bildendes Dekorvlies (7) auf dem Trägerband (3) angeordnet und mit einem Harz getränkt wird, woraufhin die Glasfasern enthaltende Matte (13) auf das Dekorvlies (7) gelegt wird, wonach das Vlies (7) und die Matte (13) zusammengedrückt und anschließend durch einen Ofen geführt werden, in dem Einrichtungen angeordnet sind, mit denen ein Profil in die Anordnung aus Vlies (7) und Matte (13) gepresst wird.

2. Verfahren nach einem der vorhergehenden Ansprüche, **dadurch gekennzeichnet, dass** ein Harz auf das Trägerband (3) aufgebracht wird, bevor die Glasfasern enthaltende Matte (13) und ein Dekorvlies (7) auf dem Trägerband (3) angeordnet werden.

3. Verfahren nach Anspruch 1 oder 2, **dadurch gekennzeichnet, dass** auf beiden Seiten des Vlieses und der Matte Dichtstreifen auf dem Trägerband angeordnet werden.

4. Verfahren nach einem der vorhergehenden Ansprüche, **dadurch gekennzeichnet, dass** eine Abdeckfolie (18) auf die Anordnung aus Vlies und Matte (13) gelegt wird, woraufhin die Anordnung zwischen Walzen hindurchgeführt und somit zusammengedrückt wird.

5. Verfahren nach Anspruch 4, **dadurch gekennzeichnet, dass** die Abdeckfolie (18) nach dem Durchführen durch den Ofen von der Platte entfernt wird.

6. Verfahren nach einem der vorhergehenden Ansprüche, **dadurch gekennzeichnet, dass** das Vlies (7) ± 50 g/m² und die Matte ± 350 g/m² wiegt.

## Revendications

1. Procédé de fabrication d'un panneau, dans lequel un mat (13) contenant des fibres de verre est posé sur une courroie transporteuse, est saturé en résine et, conjointement à une feuille décorée, passe devant une source de chaleur dans le but de durcir la résine, **caractérisé en ce qu'**une nappe décorée (7) contenant des fibres de verre formant ladite feuille est placée sur la courroie transporteuse (3) et saturée en résine, après quoi le mat contenant des fibres de verre (13) est posé sur la nappe décorée (7), puis la nappe (7) et le mat (13) sont pressés ensemble et transportés ultérieurement pour passer par un fourneau dans lequel des moyens sont disposés grâce auxquels un profilé est pressé dans l'assemblage de nappe (7) et mat (13).

2. Procédé selon l'une quelconque des revendications précédentes, **caractérisé en ce qu'**une résine est appliquée à la courroie transporteuse (3) avant que le mat contenant des fibres de verre (13) et une nappe décorée (7) soient placés sur la courroie transporteuse (3).

3. Procédé selon la revendication 1 ou 2, **caractérisé en ce que** des bandes d'étanchéité sont agencées sur la courroie transporteuse de chaque côté de la nappe et du mat.

4. Procédé selon l'une quelconque des revendications précédentes, **caractérisé en ce qu'**un film de recouvrement (18) est posé sur l'assemblage de nappe et mat (13), après quoi ledit assemblage est passé entre des rouleaux de façon à être comprimé.

5. Procédé selon la revendication 4, **caractérisé en ce que** ledit film de recouvrement (18) est retiré du panneau après être passé par le fourneau.

6. Procédé selon l'une quelconque des revendications précédentes, **caractérisé en ce que** la nappe (7) pèse ± 50 g/m² et le mat pèse ± 350 g/m².
